# EUROPEAN PATENT APPLICATION

(11) **EP 4 572 505 A1**
(43) Date of publication of application: **18.06.2025**
(21) Application number: 23851724.7
(22) Date of filing: 04.08.2023
(51) Int. Cl.: H04W 74/08

(54) **DATA PROCESSING METHOD, TERMINAL AND NETWORK-SIDE DEVICE**

(30) Priority: 10.08.2022 CN 202210957929; 17.08.2022 CN 202210987783
(71) Applicant: Vivo Mobile Communication Co., Ltd., Dongguan, Guangdong 523863 (CN)
(72) Inventor: ZHANG, Yanxia, Dongguan, Guangdong 523863 (CN)
(74) Representative: Cabinet Beaumont
(86) International application number: PCT/CN2023/111236
(87) International publication number: WO 2024/032503

(57) **Abstract**

This application discloses a data processing method, a terminal, and a network-side device, and pertains to the field of communication technology. The data processing method in an embodiment of this application includes: during an uplink out-of-synchronization period, performing, by a terminal, any one of the following: canceling a triggered buffer status report BSR; triggering a BSR in a case that a BSR triggering condition is met; deferring triggering a BSR in a case that a BSR triggering condition is met; and skipping triggering a BSR.

## Description

### CROSS-REFERENCE TO RELATED APPLICATIONS

This application claims priority to Chinese patent application No. 202210957929.8, filed with the China Patent Office on August 10, 2022 and entitled "DATA PROCESSING METHOD, TERMINAL, AND NETWORK-SIDE DEVICE", and Chinese patent application No. 202210987783.1, filed with the China Patent Office on August 17, 2022 and entitled "DATA PROCESSING METHOD, TERMINAL, AND NETWORK-SIDE DEVICE", which are incorporated herein by reference in their entirety.

### TECHNICAL FIELD

This application pertains to the field of communication technology, and specifically relates to a data processing method, a terminal, and a network-side device.

### BACKGROUND

In R17 non-terrestrial network (Non-Terrestrial Networks, NTN) scenarios, when the validity timer corresponding to ephemeris information expires, a terminal cannot perform any uplink transmission until the latest valid ephemeris information is obtained.

In the related art, during a period from expiry of the validity timer corresponding to obtaining of the latest valid ephemeris information by the terminal, the terminal may trigger a buffer status report (Buffer Status Report, BSR) (for example, when uplink data arrives at the terminal). In this case, although there is no available uplink resource to transmit the uplink data, the terminal still triggers a series of resource application procedures, such as triggering a BSR, a scheduling request (Scheduling Request, SR), and a random access channel (Random Access Channel, RACH). When uplink transmission recovers, the terminal continues to trigger a series of resource application procedures to apply for uplink resources.

However, when the latest valid ephemeris information is obtained by terminal, the uplink data arriving at the terminal may have been discarded due to excessively long waiting time. Therefore, when the uplink transmission recovers, the terminal still performs the uplink resource application procedure (such as RACH to send a BSR medium access control (Medium Access Control, MAC) control element (Control Element, CE)), resulting in resource waste.

### SUMMARY

Embodiments of this application provide a data processing method, a terminal, and a network-side device, to solve the problem of resource waste.

According to a first aspect, a data processing method is provided. The method includes:
during an uplink out-of-synchronization period, performing, by a terminal, any one of the following:
canceling a triggered buffer status report BSR;
triggering a BSR in a case that a BSR triggering condition is met;
deferring triggering a BSR in a case that a BSR triggering condition is met; and
skipping triggering a BSR.

According to a second aspect, a data processing method is provided. The method includes:
sending, by a network-side device, configuration information to a terminal; where
the configuration information is used for the terminal to manage a buffer status report BSR processing behavior to be performed within an uplink out-of-synchronization period.

According to a third aspect, a data processing apparatus is provided. The apparatus includes:
an execution module configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

According to a fourth aspect, a data processing apparatus is provided. The apparatus includes:
a sending module configured to send configuration information to a terminal; where
the configuration information is used for the terminal to manage a buffer status report BSR processing behavior to be performed within an uplink out-of-synchronization period.

According to a fifth aspect, a terminal is provided. The terminal includes a processor and a memory, where the memory stores a program or instructions capable of running on the processor, and when the program or instructions are executed by the processor, the steps of the method according to the first aspect are implemented.

According to a sixth aspect, a terminal is provided, including a processor and a communication interface. The processor is configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

According to a seventh aspect, a network-side device is provided. The network-side device includes a processor and a memory, where the memory stores a program or instructions capable of running on the processor, and when the program or instructions are executed by the processor, the steps of the method according to the second aspect are implemented.

According to an eighth aspect, a network-side device is provided, including a processor and a communication interface, where the communication interface is configured to send configuration information to a terminal, where the configuration information is used for the terminal to manage a buffer status report BSR processing behavior during an uplink out-of-synchronization period.

According to a ninth aspect, a data processing system is provided, including a terminal and a network-side device, where the terminal is configured to perform the steps of the method according to the first aspect, and the network-side device is configured to perform the steps of the method according to the second aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eleventh aspect, a chip is provided. The chip includes a processor and a communication interface, where the communication interface is coupled to the processor, and the processor is configured to run a program or instructions to implement the method according to the first aspect or the method according to the second aspect.

According to a twelfth aspect, a computer program/program product is provided, where the computer program/program product is stored in a storage medium, and the computer program/program product is executed by at least one processor to implement the steps of the method according to the first aspect, or implement the steps of the method according to the second aspect.

In the embodiments of this application, during the uplink out-of-synchronization period, the terminal standardizes its BSR processing behaviors in this period by performing any one of the following: canceling a triggered buffer status report BSR; triggering a BSR in a case that a BSR triggering condition is met; deferring triggering a BSR in a case that a BSR triggering condition is met; and skipping triggering a BSR. This prevents the terminal from initiating unnecessary uplink resource application procedures after uplink synchronization recovery, thereby improving resource utilization.

### BRIEF DESCRIPTION OF DRAWINGS

FIG. 1 is a schematic diagram of a wireless communication system to which the embodiments of this application are applicable;
FIG. 2 is a schematic diagram of a non-terrestrial network to which the embodiments of this application are applicable;
FIG. 3 is a first schematic flowchart of a data processing method according to an embodiment of this application;
FIG. 4 is a second schematic flowchart of a data processing method according to an embodiment of this application;
FIG. 5 is a first schematic structural diagram of a data processing apparatus according to an embodiment of this application;
FIG. 6 is a second schematic structural diagram of a data processing apparatus according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other communication systems than an NR system application, for example, the 6th generation (6^{th} Generation, 6G) communication system.

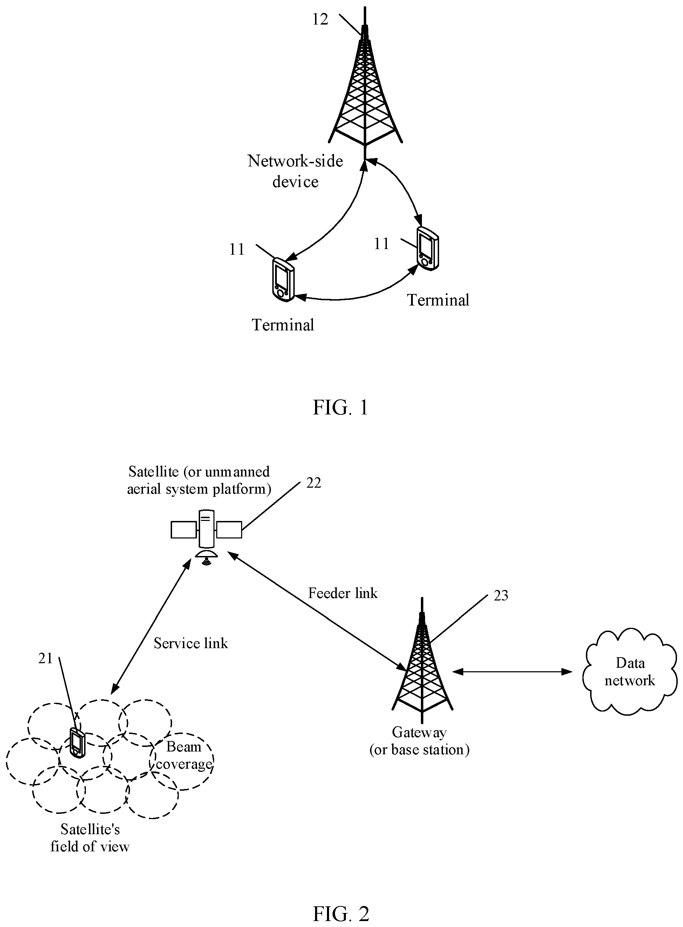

FIG. 1 is a schematic diagram of a wireless communication system to which the embodiments of this application are applicable. The wireless communication system shown in FIG. 1 includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that a specific type of the terminal 11 is not limited in the embodiments of this application.

The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP), or other suitable terms in the field. As long as the same technical effect is achieved, the base station is not limited to specific technical terms. It should be noted that in the embodiments of this application, only the base station in the NR system is used as an example for description, but the specific type of the base station is not limited.

The following details a data processing method provided in the embodiments of this application through some embodiments and application scenarios thereof with reference to the accompanying drawings.

The embodiments of this application provides a solution to the problem of resource waste caused by that during an uplink out-of-synchronization period, uplink data arriving at a terminal may have been discarded due to an excessively long waiting time, but the terminal still performs uplink resource application procedures upon uplink synchronization recovery, resulting in resource waste. To address this problem, the embodiments of this application provide a solution that can standardize a BSR processing behavior to be performed by the terminal in the uplink out-of-synchronization period, to prevent the terminal from initiating unnecessary uplink resource application procedures after uplink synchronization recovery, thereby improving resource utilization. To facilitate a clearer understanding of the embodiments of this application, the following first describes some related technical knowledge.

### 1. Non-terrestrial network (Non-terrestrial networks, NTN)

FIG. 2 is a schematic diagram of a non-terrestrial network to which the embodiments of this application are applicable. As shown in FIG. 2, a typical NTN deployment scenario includes a terminal 21, a satellite (Satellite) (or an unmanned aerial system platform (Unmanned Aerial System platform, UAS platform)) 22, and a gateway (Gateway) (or base station) 23. In R17, the terminal 21, the base station 23, and the core network device are all deployed on the ground, and communication data between the terminal 21 and the base station 23 is relayed via the satellite 22 in the air. As shown in FIG. 2, a link between the terminal 21 and the satellite 22 is known as a service link (service link), and a link between satellite 22 and the base station 23 is known as a feeder link (feeder link).

Compared with a terrestrial network (Terrestrial Networks, TN) system, a satellite-based non-terrestrial communication system has a broader coverage area, and therefore can be used to provide supplementary coverage in deserts, remote villages, and the like, and provide emergency communication coverage in areas affected by natural disasters.

### 2. Ephemeris information maintenance

In an NTN scenario, a terminal needs to maintain ephemeris information of the satellite to facilitate operations such as uplink transmission compensation and mobility management. In R17, a network-side device can provide ephemeris information of a serving cell through SIB 19. After the terminal receives the ephemeris information, the terminal maintains a corresponding validity timer (T430). When the timer expires, the terminal considers the ephemeris information corresponding to the timer as invalid, and the terminal cannot perform any uplink transmission. For example, in a case that T430 corresponding to the serving cell expires, the ephemeris information corresponding to the serving cell becomes invalid. Radio resource control (RRC) of the terminal indicates to a MAC layer that the serving cell is out of uplink synchronization. In this case, the MAC layer cannot perform any uplink transmission. The terminal can resume uplink transmission after SIB19 is obtained. For example, after T430 corresponding to the serving cell expires, the terminal attempts to obtain SIB19 again. When SIB19 is successfully obtained, RRC of the terminal indicates to the MAC that the serving cell is in uplink synchronization. In this case, the MAC layer allows uplink transmission.

### 3. Uplink resource handling

In the mechanism of the related art, when data arrives (for example, high-priority data arrives), a terminal triggers a BSR procedure to apply for an uplink resource. When there are no uplink resources or the uplink resources (that is, physical uplink shared channel (Physical Uplink Shared Channel, PUSCH) resources) are insufficient to transmit a BSR, the terminal triggers an SR procedure. When there are no valid resources (that is, physical uplink control channel (Physical Uplink Control Channel, PUCCH) resources) to transmit an SR, the terminal initiates a random access channel (Random Access Channel, RACH) procedure.

The data processing method provided in the embodiments of this application can be applied to the NTN scenario. During an uplink out-of-synchronization period, a terminal performs any one of the following: canceling a triggered buffer status report BSR; triggering a BSR in a case that a BSR triggering condition is met; deferring triggering a BSR in a case that a BSR triggering condition is met; and skipping triggering a BSR. This standardizes a BSR processing behavior of the terminal during the uplink out-of-synchronization period, to prevent the terminal from initiating unnecessary uplink resource application procedures after uplink synchronization recovery, thereby improving resource utilization.

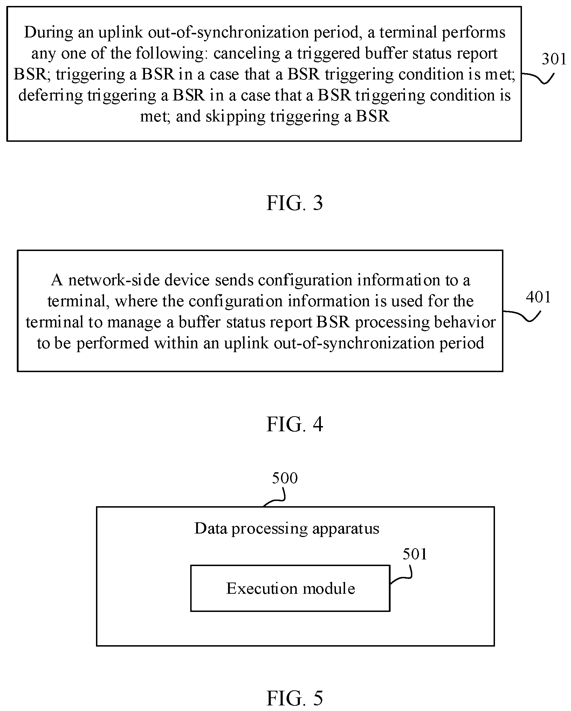

FIG. 3 is a first schematic flowchart of a data processing method according to an embodiment of this application. As shown in FIG. 3, the method includes Step 301.

Step 301. During an uplink out-of-synchronization period, a terminal performs any one of the following:
canceling a triggered buffer status report BSR;
triggering a BSR in a case that a BSR triggering condition is met;
deferring triggering a BSR in a case that a BSR triggering condition is met; and
skipping triggering a BSR.

It should be noted that the embodiment of this application can be applied to an NTN scenario, and the terminal includes but is not limited to the types of the terminal 11 listed above, and the network-side device includes but is not limited to the types of the network-side device 12 listed above. The embodiments of this application are not limited thereto.

Specifically, when a validity timer maintained by the terminal expires, ephemeris information corresponding to the timer becomes invalid, and the terminal cannot perform any uplink transmission. For example, when a validity timer T430 corresponding to ephemeris information of a serving cell expires, the terminal cannot perform any uplink transmission in the serving cell.

In practice, during the uplink out-of-synchronization period, the terminal can perform any one of the following:

### (1) canceling a triggered buffer status report BSR.

Specifically, during the uplink out-of-synchronization period, the terminal can cancel all BSRs triggered before the uplink out-of-synchronization, and/or cancel BSRs triggered within the uplink out-of-synchronization period.

### (2) triggering a BSR in a case that a BSR triggering condition is met.

Optionally, the BSR triggering condition includes one or more of the following:
(a) uplink data has arrived; and
(b) a BSR timer has expired; where the BSR timer includes at least one of a BSR retransmission timer and a periodic BSR timer.

Specifically, during the uplink out-of-synchronization period, in a case that the uplink data becomes available (which can be understood as when the uplink data arrives), since the terminal has no uplink transmission resources or considers the uplink transmission resources as unavailable resources (for example, during the uplink out-of-synchronization period, the terminal considers configured grant (Configured Grant, CG) resources configured by the network-side device or dynamic grant (Dynamical Grant, DG) resources scheduled by the network-side device as unavailable resources) during the uplink out-of-synchronization period, the terminal can trigger a BSR according to the conventional process; or in a case that a BSR timer maintained by the terminal expires, where the BSR timer includes at least one of a BSR retransmission timer and a periodic BSR timer, that is, in a case that the BSR timer expires, the terminal can trigger a BSR.

### (3) deferring triggering a BSR in a case that a BSR triggering condition is met.

Specifically, in a case that the uplink data arrives or the BSR timer expires, the terminal may not trigger the BSR according to the conventional process, but defer triggering the BSR until uplink synchronization is recovered.

### (4) skipping triggering a BSR.

Specifically, during the uplink out-of-synchronization period, in a case that the uplink data arrives, the terminal does not trigger the BSR according to the conventional process, but skips triggering the BSR within the uplink out-of-synchronization period.

It should be noted that there are two cases in which the terminal does not trigger the BSR.
(1) During the uplink out-of-synchronization period, regardless of whether the BSR triggering condition in the related art is met, the terminal is not allowed to trigger the BSR. This means that during the uplink out-of-synchronization period, the terminal is never allowed to trigger the BSR, that is, the terminal does not need to determine whether the BSR triggering condition is met.
(2) During the uplink out-of-synchronization period, in a case that the BSR triggering condition in the related art is met, the terminal does not trigger the BSR. This means that during the uplink out-of-synchronization period, the terminal needs to determine whether the BSR triggering condition is met. In a case that the terminal determines that the BSR triggering condition is met, the terminal behavior can be skipping triggering the BSR.

In the data processing method according to the embodiment of this application, during the uplink out-of-synchronization period, the terminal performs any one of the following: canceling a triggered buffer status report BSR; triggering a BSR in a case that a BSR triggering condition is met; deferring triggering a BSR in a case that a BSR triggering condition is met; and skipping triggering a BSR. This standardizes a BSR processing behavior of the terminal during the uplink out-of-synchronization period, to prevent the terminal from initiating unnecessary uplink resource application procedures after uplink synchronization recovery, thereby improving resource utilization.

The following describes the specific manners in which the terminal handles a BSR during the uplink out-of-synchronization period in the embodiments of this application.

### 1. Canceling a triggered BSR

Optionally, the canceling a triggered BSR includes one or more of the following:
(1) when an uplink out-of-synchronization indication is obtained, canceling, by the terminal, a BSR triggered before the uplink out-of-synchronization indication is obtained.
   Specifically, during the uplink out-of-synchronization period, before the terminal obtains the uplink out-of-synchronization indication, the terminal can trigger the BSR according to the conventional process due to arrival of uplink data; and when the terminal has obtained the uplink out-of-synchronization indication, the terminal can cancel, based on the uplink out-of-synchronization indication, all BSRs triggered before the uplink out-of-synchronization indication is obtained.
(2) canceling, by the terminal, a BSR triggered within the uplink out-of-synchronization period.

Specifically, during the uplink out-of-synchronization period, due to arrival of uplink data, the terminal can first trigger the BSR according to the conventional process, so the terminal can cancel all BSRs triggered within the uplink out-of-synchronization period. This means that during the uplink out-of-synchronization period, in a case that the BSR triggering condition is met, the terminal still performs the behavior of triggering a BSR. In addition to performing the behavior of triggering a BSR, the terminal also performs the behavior of canceling a triggered BSR, to ensure that the terminal has no pending BSRs (pending BSR) upon uplink synchronization recovery, thereby avoiding that the terminal always needs to perform a BSR MAC CE reporting procedure upon uplink synchronization recovery.

Optionally, the canceling, by the terminal, a BSR triggered within the uplink out-of-synchronization period may be: during the uplink out-of-synchronization period, in a case that the terminal has no data to be transmitted (for example, an amount of data to be transmitted is 0), canceling, by the terminal, the BSR triggered within the uplink out-of-synchronization period.

In another optional embodiment, during the uplink out-of-synchronization period, in a case that the terminal has no data to be transmitted (for example, an amount of data to be transmitted is 0), the terminal cancels the triggered BSR. It should be noted that the triggered BSR may be triggered within the uplink out-of-synchronization period, or may be triggered at other times (for example, may be triggered at any time before the uplink out-of-synchronization period).

Optionally, the canceling a triggered BSR further includes one or more of the following:
(a) canceling a scheduling request (Scheduling Request, SR) triggered by a BSR.
   Specifically, during an uplink synchronization period, the terminal can trigger a BSR, and the BSR can trigger an SR, so the terminal can cancel the SR triggered by the BSR. This means that during the uplink out-of-synchronization period, in a case that the BSR triggering condition is met, the terminal still performs the behavior of triggering a BSR. Since the terminal cannot perform any transmission during the uplink out-of-synchronization period, the terminal can consider that there are no available transmission resources (such as PUSCH), and therefore the terminal can trigger the SR based on the mechanism of the related art. In this case, in addition to performing the behavior of triggering a BSR, the terminal also performs the behavior of canceling a triggered SR. This avoids that the terminal has no pending SRs (pending SR) upon uplink synchronization recovery, further avoiding that the terminal always needs to perform the SR procedure upon uplink synchronization recovery.
(b) canceling a random access procedure initiated by an SR.

Specifically, during the uplink synchronization period, the terminal can trigger a BSR, the BSR can trigger an SR, and the SR can initiate a random access procedure RACH, so the terminal can cancel all random access procedures initiated by the SR within the uplink out-of-synchronization period. This means that during the uplink out-of-synchronization period, in a case that the BSR triggering condition is met, the terminal still performs the behavior of triggering a BSR. Since the terminal cannot perform any transmission during the uplink out-of-synchronization period, the terminal can consider that there are no available transmission resources (such as PUSCH), and therefore the terminal can trigger the SR based on the mechanism of the related art. Since the terminal cannot perform any transmission during the uplink out-of-synchronization period, the terminal can consider that there are no available SR transmission resources (such as PUCCH), and therefore the terminal can initiate the RACH procedure based on the mechanism of the related art. In this case, in addition to performing the behavior of initiating a RACH procedure, the terminal also performs the behavior of stopping an initiated RACH. This avoids that the terminal has no initiated RACH procedures upon uplink synchronization recovery, further avoiding that the terminal always needs to perform the RACH procedure upon uplink synchronization recovery.

Optionally, in a case that the terminal cancels the triggered BSR, the method may include one or more of the following:
(1) in a case that uplink synchronization recovers, if an amount of data to be transmitted by the terminal is not zero, triggering, by the terminal, a BSR.
   Specifically, in a case that uplink synchronization recovers, if the terminal has data to be transmitted or an amount of the (latest) data to be transmitted is not zero, the terminal can trigger the BSR. For example, when uplink synchronization recovers, the terminal needs to first determine whether the amount of data to be transmitted is zero. If the amount of data to be transmitted is not zero, the terminal can trigger the BSR. A specific application scenario may be: during the uplink out-of-synchronization period, in a case that the BSR triggering condition is met (for example, uplink data has arrived), the terminal performs the behavior of triggering a BSR and the behavior of canceling a triggered BSR, so that there are no pending BSRs (pending BSR) upon uplink synchronization recovery. When uplink synchronization recovers, if the terminal still has data to be transmitted (for example, data that has arrived during the uplink out-of-synchronization period and has not been discarded upon uplink synchronization recovery), the terminal needs to trigger a BSR to ensure timely transmission of the data. Additionally, it should be noted that when uplink synchronization recovers, if the uplink resource of the terminal is sufficient to transmit the amount of the (latest) data to be transmitted, the terminal does not need to trigger a BSR. However, when uplink synchronization recovers, if the amount of data to be transmitted by the terminal is not zero and the uplink resource of the terminal is insufficient to transmit the amount of the (latest) data to be transmitted, the terminal needs to trigger a BSR.
(2) in a case that uplink synchronization recovers, if a BSR timer of the terminal expires or has already expired, triggering, by the terminal, a BSR.

Specifically, in a case that uplink synchronization recovers, if the BSR timer of the terminal expires or has already expired, where the BSR timer includes at least one of a BSR retransmission timer and a periodic BSR timer, the terminal can trigger the BSR. A specific application scenario may be: during the uplink out-of-synchronization period, in a case that the BSR triggering condition is met (for example, the BSR retransmission timer and/or the periodic BSR timer expires), the terminal performs the behavior of triggering a BSR and the behavior of canceling a triggered BSR, so that there are no pending BSRs (pending BSR) upon uplink synchronization recovery. When uplink synchronization recovers, the terminal can trigger the BSR.

In the data processing method according to the embodiments of this application, when the uplink out-of-synchronization indication is obtained, the terminal can cancel the BSR triggered before the uplink out-of-synchronization indication is obtained; the terminal can cancel the BSR triggered within the uplink out-of-synchronization period; the terminal can cancel the scheduling request SR triggered by the BSR; or the terminal can cancel the random access procedure initiated by the SR; in a case that uplink synchronization recovers, if the amount of data to be transmitted by the terminal is not zero, the terminal triggers the BSR; and in a case that uplink synchronization recovers, if the BSR timer of the terminal expires or has already expired, the terminal triggers the BSR. This standardizes BSR processing of the terminal during the uplink out-of-synchronization period and after uplink synchronization recovery, to prevent the terminal from initiating unnecessary uplink resource application procedures after uplink synchronization recovery, thereby improving resource utilization.

### 2. Triggering a BSR

Optionally, in a case that the terminal triggers the BSR when the BSR triggering condition is met, the method may include one or more of the following:
(1) during the uplink out-of-synchronization period, skipping triggering an SR based on the BSR.
   Specifically, during the uplink out-of-synchronization period, when uplink data arrives, the terminal has no uplink transmission resources within this period or considers the uplink transmission resources as unavailable resources, the terminal can trigger the BSR according to the conventional process, but the BSR may not trigger an SR.
(2) during the uplink out-of-synchronization period, skipping initiating a random access procedure based on an SR triggered by the BSR.

Specifically, during the uplink out-of-synchronization period, in a case that the BSR triggering condition is met, the terminal triggers a BSR, the BSR triggers an SR, but the SR triggered by the BSR may not initiate a random access procedure.

Optionally, in a case that the terminal triggers the BSR, the method may include one or more of the following:
(a) in a case that uplink synchronization recovers, if the terminal has no data to be transmitted, canceling, by the terminal, a BSR triggered before uplink synchronization recovery.

It should be noted that the canceling, by the terminal, a BSR triggered before uplink synchronization recovery includes canceling a BSR triggered before the uplink out-of-synchronization and a BSR triggered within the uplink out-of-synchronization period.

Specifically, during a waiting period for uplink synchronization recovery, the uplink data is discarded due to the excessively long waiting time (for example, a corresponding data packet is discarded due to expiry of a packet data convergence protocol (Packet Data Convergence Protocol, PDCP) discard (discard) timer (timer) corresponding to the data packet). Then, in a case that uplink synchronization recovers, if the amount of the (latest) data to be transmitted by the terminal is zero, that is, the terminal has no data to be transmitted or the amount of the (latest) data to be transmitted is zero, the terminal can cancel all BSRs triggered according to the conventional process before uplink synchronization recovery.

(b) in a case that uplink synchronization recovers, if the terminal has no data to be transmitted, canceling, by the terminal, a BSR triggered within an uplink synchronization period.

Specifically, in a case that uplink synchronization recovers, if the terminal has no data to be transmitted or the amount of the (latest) data to be transmitted is zero, the terminal can cancel all BSRs triggered within the uplink synchronization period. During a waiting period for uplink synchronization recovery, uplink data arrives, and the terminal triggers a BSR. However, the uplink data is discarded due to the excessively long waiting time (for example, a corresponding data packet is discarded due to expiry of a packet data convergence protocol (Packet Data Convergence Protocol, PDCP) discard (discard) timer (timer) corresponding to the data packet). Then, in a case that uplink synchronization recovers, if the amount of the (latest) data to be transmitted by the terminal is zero, that is, the terminal has no data to be transmitted or the amount of the (latest) data to be transmitted is zero, the terminal can cancel all BSRs triggered according to the conventional process within the uplink out-of-synchronization period.

(c) in a case that uplink synchronization recovers, if the terminal has no data to be transmitted, canceling, by the terminal, an SR triggered by a BSR before uplink synchronization recovery.

It should be noted that the canceling, by the terminal, an SR triggered before uplink synchronization recovery includes canceling all SRs triggered before the uplink out-of-synchronization and SRs triggered within the uplink out-of-synchronization period, where the SRs may be SRs triggered by the BSR.

Specifically, in a case that uplink synchronization recovers, if the terminal has no data to be transmitted or the amount of the (latest) data to be transmitted is zero, but the terminal has triggered a BSR and the BSR has triggered an SR before the uplink synchronization recovery, the terminal can cancel the SR triggered by the BSR before the uplink synchronization recovery.

(d) in a case that uplink synchronization recovers, if the terminal has no data to be transmitted, canceling, by the terminal, an SR triggered by a BSR within an uplink synchronization period.

Specifically, during a waiting period for uplink synchronization recovery, uplink data arrives, then the terminal triggers a BSR, and the BSR triggers an SR. Then, in a case that uplink synchronization recovers, if the terminal has no data to be transmitted or the amount of the (latest) data to be transmitted is zero, the terminal can cancel the SR triggered by the BSR within the uplink synchronization period.

(e) in a case that uplink synchronization recovers, if the terminal has no data to be transmitted, stopping, by the terminal, a random access procedure initiated by an SR before uplink synchronization recovery.

It should be noted that the stopping, by the terminal, an RACH triggered before uplink synchronization recovery includes: stopping an RACH initiated before the uplink out-of-synchronization and an RACH initiated within the uplink out-of-synchronization period, where the RACHs may be initiated by an SR, and the SR is triggered by a BSR.

Specifically, before uplink synchronization recovery, the terminal triggers the BSR, the BSR triggers the SR, and the SR initiates the random access procedure. Then, in a case that uplink synchronization recovers, if the terminal has no data to be transmitted or the amount of the (latest) data to be transmitted is zero, the terminal can stop the random access procedure initiated by the SR before uplink synchronization recovery.

(f) in a case that uplink synchronization recovers, if the terminal has no data to be transmitted, stopping, by the terminal, a random access procedure initiated by an SR within the uplink out-of-synchronization period.

Specifically, during the uplink out-of-synchronization period, uplink data arrives, then the terminal triggers a BSR, the BSR triggers an SR, and the SR initiates a random access procedure. Then, in a case that uplink synchronization recovers, if the terminal has no data to be transmitted or the amount of the (latest) data to be transmitted is zero, the terminal stops the random access procedure initiated by the SR within the uplink out-of-synchronization period.

(g) in a case that uplink synchronization recovers, if the terminal has a valid SR transmission resource, canceling, by the terminal, a random access procedure initiated by an SR within an uplink synchronization period.

For example, during the uplink out-of-synchronization period, in a case that the BSR triggering condition is met (for example, when uplink data arrives), since there are no available uplink transmission resources (that is, PUSCH resources), the terminal triggers a BSR, and the BSR triggers an SR. Since during the uplink out-of-synchronization period, SR transmission resources (that is, PUCCH resources) are also considered as unavailable resources, the terminal can initiate a random access procedure. After uplink synchronization recovery, if the terminal has no uplink resources or the uplink resources are insufficient to transmit all the data to be transmitted (which can be understood as that the amount of data to be transmitted is not zero) or BSR MAC CEs, but the terminal has an available valid SR transmission resource, the terminal can cancel the random access procedure initiated by the SR within the uplink synchronization period. Additionally, in this case, the terminal can trigger an SR.

(h) in a case that uplink synchronization recovers, if the terminal has a valid SR transmission resource, triggering, by the terminal, an SR.

Specifically, in a case that uplink synchronization recovers, if the terminal has no uplink resources or the uplink resources are insufficient to transmit all data to be transmitted or BSR MAC CEs, but the terminal has an available valid SR transmission resource, the terminal can trigger the SR. For example, during the uplink out-of-synchronization period, in a case that the BSR triggering condition is met (for example, when uplink data arrives), since there are no available uplink transmission resources (that is, PUSCH resources), the terminal triggers a BSR, but the BSR does not trigger an SR. In a case that uplink synchronization recovers, if the terminal has no uplink resources or the uplink resources are insufficient to transmit all the data to be transmitted (which can be understood as that the amount of data to be transmitted is not zero) or BSR MAC CEs, but the terminal has an available valid SR transmission resource, the terminal can trigger the SR.

In the data processing method according to the embodiments of this application, during the uplink out-of-synchronization period, the BSR does not trigger the SR, or the SR triggered by the BSR does not initiate the random access procedure; in a case that uplink synchronization recovers, if the terminal has no data to be transmitted, the terminal can cancel the BSR triggered before uplink synchronization recovery, or the terminal can cancel the BSR triggered within the uplink synchronization period, or the terminal can cancel the SR triggered by the BSR before uplink synchronization recovery, or the terminal can cancel the SR triggered by the BSR within the uplink synchronization period, or the terminal can stop the random access procedure initiated by the SR before uplink synchronization recovery, or the terminal can stop the random access procedure initiated by the SR within the uplink out-of-synchronization period; or if the terminal has a valid SR transmission resource, the terminal cancels the random access procedure initiated by the SR within the uplink synchronization period; or if the terminal has a valid SR transmission resource, the terminal triggers the SR. This standardizes BSR processing of the terminal during the uplink out-of-synchronization period and in a case of uplink synchronization recovery, to prevent the terminal from initiating unnecessary uplink resource application procedures after uplink synchronization recovery, thereby improving resource utilization.

### 3. Deferring triggering a BSR

Optionally, in a case that the terminal defers triggering the BSR when the BSR triggering condition is met, the method may include one or more of the following:
(1) in a case that uplink synchronization recovers, triggering, by the terminal, the BSR.

Specifically, in a case that uplink synchronization recovers, the terminal can trigger the BSR. For example, when uplink synchronization recovers, the terminal can trigger the BSR. That is, during the uplink out-of-synchronization period, when uplink data arrives, the terminal does not trigger the BSR, but triggers the BSR in a case of uplink synchronization recovery. An example application scenario is: during the uplink out-of-synchronization period, in a case that the BSR triggering condition is met, the terminal defers triggering a BSR. In a case that uplink synchronization recovers, the terminal triggers the BSR. This means that in a case that uplink synchronization recovers, regardless of whether there is data to be transmitted, the terminal triggers the BSR. Additionally, it should be noted that in such case, if a conventional BSR is triggered, the terminal can perform an uplink skipping (UL skipping) procedure in a case that there is no data to be transmitted. That is, when the terminal performs a MAC multiplexing procedure, if the amount of data to be transmitted indicated by the conventional BSR is zero, the terminal can skip transmitting a BSR MAC CE on an uplink grant resource.

(2) in a case that uplink synchronization recovers, if an amount of data to be transmitted by the terminal is not zero, triggering, by the terminal, the BSR.

Specifically, in a case that uplink synchronization recovers, if the terminal has data to be transmitted or the amount of data to be transmitted is not zero, the terminal can trigger the BSR. For example, when uplink synchronization recovers, the terminal needs to first determine whether the amount of data to be transmitted is zero. If the amount of data to be transmitted is not zero, the terminal can trigger the BSR. Additionally, it should be noted that when uplink synchronization recovers, if the uplink resource of the terminal is sufficient to transmit the amount of the (latest) data to be transmitted, the terminal does not need to trigger the BSR. However, when uplink synchronization recovers, if the amount of data to be transmitted by the terminal is not zero and the uplink resource of the terminal is insufficient to transmit the amount of the (latest) data to be transmitted, the terminal triggers the BSR.

(3) in a case that uplink synchronization recovers, if a BSR timer of the terminal expires or has already expired, triggering, by the terminal, the BSR.

Specifically, in a case that uplink synchronization recovers, if the BSR timer of the terminal expires or has already expired, the terminal can trigger the BSR. A specific application scenario may be: during the uplink out-of-synchronization period, in a case that the BSR triggering condition is met (for example, the BSR retransmission timer and/or the periodic BSR timer expires), the terminal performs the behavior of triggering a BSR and the behavior of canceling a triggered BSR, so that there are no pending BSRs (pending BSR) upon uplink synchronization recovery. When uplink synchronization recovers, the terminal can trigger the BSR.

(4) in a case that uplink synchronization recovers, if an amount of data to be transmitted by the terminal is zero, skipping triggering, by the terminal, the BSR.

Specifically, in a case that uplink synchronization recovers, if the terminal has no data to be transmitted or the amount of the (latest) data to be transmitted is zero, the terminal may not trigger the BSR. During a waiting period for uplink synchronization recovery, the uplink data is discarded due to the excessively long waiting time (for example, a corresponding data packet is discarded due to expiry of a packet data convergence protocol (Packet Data Convergence Protocol, PDCP) discard (discard) timer (timer) corresponding to the data packet). Then, in a case that uplink synchronization recovers, if the amount of the (latest) data to be transmitted by the terminal is zero, that is, the terminal has no data to be transmitted or the amount of the (latest) data to be transmitted is zero, the terminal may not trigger the BSR.

(5) in a case that uplink synchronization recovers, if an uplink resource is insufficient to transmit all data to be transmitted, triggering, by the terminal, the BSR.

Specifically, in a case that uplink synchronization recovers, if the uplink resource is insufficient to transmit all the data to be transmitted, the terminal can trigger the BSR. For example, during the uplink out-of-synchronization period, the configured grant (Configured Grant, CG) resources the terminal are considered as unavailable resources. After uplink synchronization recovery, the CG resources of the terminal are considered as available resources. Therefore, if the CG resources of the terminal are insufficient to transmit all the (latest) data to be transmitted, the terminal can trigger the BSR.

(6) in a case that uplink synchronization recovers, if an uplink resource is sufficient to transmit all data to be transmitted, skipping triggering, by the terminal, the BSR.

Specifically, in a case that uplink synchronization recovers, if the uplink resource is sufficient to transmit all the data to be transmitted, the terminal may not trigger the BSR. For example, during the uplink out-of-synchronization period, the CG resources of the terminal are considered as unavailable resources. After uplink synchronization recovery, the CG resources of the terminal are considered as available resources. Therefore, if the CG resources of the terminal are sufficient to transmit all the (latest) data to be transmitted, the terminal may not trigger the BSR.

In the data processing method according to the embodiments of this application, in a case that uplink synchronization recovers, the terminal triggers the BSR; or if the amount of data to be transmitted by the terminal is not zero, the terminal triggers the BSR; or if the BSR timer of the terminal expires or has already expired, the terminal triggers the BSR; or if the amount of data to be transmitted by the terminal is zero, the terminal skips triggering the BSR; or if the uplink resource is insufficient to transmit all the data to be transmitted, the terminal triggers the BSR; or if the uplink resource is sufficient to transmit all the data to be transmitted, the terminal skips triggering the BSR. This standardizes BSR processing of the terminal in a case of uplink synchronization recovery, to prevent the terminal from initiating unnecessary uplink resource application procedures after uplink synchronization recovery, thereby improving resource utilization.

### 4. Skipping triggering a BSR

Optionally, in a case that the terminal does not trigger a BSR, the method may include one or more of the following:
(a) in a case that uplink synchronization recovers, if an amount of data to be transmitted by the terminal is not zero, triggering, by the terminal, a BSR.

Specifically, in a case that uplink synchronization recovers, if the terminal has data to be transmitted or the amount of data to be transmitted is not zero, the terminal can trigger the BSR. For example, when uplink synchronization recovers, the terminal needs to first determine whether the amount of data to be transmitted is zero. If the amount of data to be transmitted is not zero, the terminal can trigger the BSR.

Optionally, in a case that uplink synchronization recovers, if the terminal has no data to be transmitted or the amount of data to be transmitted is zero, the terminal may not trigger the BSR. For example, when uplink synchronization recovers, the terminal needs to first determine whether the amount of data to be transmitted is zero. If the amount of data to be transmitted is zero, the terminal may not trigger the BSR.

(b) in a case that uplink synchronization recovers, if a BSR timer of the terminal expires or has already expired, triggering, by the terminal, a BSR.

Specifically, in a case that uplink synchronization recovers, if the BSR timer of the terminal expires or has already expired, the terminal can trigger the BSR. A specific application scenario may be: during the uplink out-of-synchronization period, in a case that the BSR triggering condition is met (for example, the BSR retransmission timer and/or the periodic BSR timer expires), the terminal performs the behavior of triggering a BSR and the behavior of canceling a triggered BSR, so that there are no pending BSRs (pending BSR) upon uplink synchronization recovery. When uplink synchronization recovers, the terminal can trigger the BSR.

(c) in a case that uplink synchronization recovers, if an uplink resource is insufficient to transmit all data to be transmitted, triggering, by the terminal, a BSR.

Specifically, in a case that uplink synchronization recovers, if the uplink resource is insufficient to transmit all the data to be transmitted, the terminal can trigger the BSR. When uplink synchronization recovers, if the amount of data to be transmitted by the terminal is not zero and the uplink resource of the terminal is insufficient to transmit the amount of the (latest) data to be transmitted, the terminal needs to trigger the BSR.

In the data processing method according to the embodiments of this application, in a case that uplink synchronization recovers, if the amount of data to be transmitted by the terminal is not zero, the terminal triggers the BSR; or if the BSR timer of the terminal expires or has already expired, the terminal triggers the BSR; or if the uplink resource is insufficient to transmit all the data to be transmitted, the terminal triggers the BSR. This standardizes BSR processing of the terminal in a case of uplink synchronization recovery, to prevent the terminal from initiating unnecessary uplink resource application procedures after uplink synchronization recovery, thereby improving resource utilization.

Optionally, the method further includes:
receiving, by the terminal, configuration information sent by a network-side device; where the configuration information is used for the terminal to manage a BSR processing behavior to be performed within the uplink out-of-synchronization period.

Specifically, the terminal can receive the configuration information sent by the network-side device; where the configuration information is used for the terminal to manage the BSR processing behavior to be performed within the uplink out-of-synchronization period. After the terminal receives the configuration information sent by the network-side device, the terminal can manage, based on the configuration information, the BSR processing behavior to be performed within the uplink out-of-synchronization period.

Optionally, the configuration information includes any one of the following:
(1) first indication information, where the first indication information is used to indicate the terminal to cancel, within the uplink out-of-synchronization period, a triggered BSR;
(2) second indication information, where the second indication information is used to indicate the terminal to trigger the BSR within the uplink out-of-synchronization period;
(3) third indication information, where the third indication information is used to indicate the terminal to defer triggering the BSR within the uplink out-of-synchronization period; and
(4) fourth indication information, where the fourth indication information is used to indicate the terminal not to trigger the BSR within the uplink out-of-synchronization period.

In practice, after the terminal receives the configuration information sent by the network-side device, the terminal can manage, based on the configuration information, the BSR processing behavior to be performed within the uplink out-of-synchronization period. For example, the terminal can cancel, based on the first indication information, a triggered BSR within the uplink out-of-synchronization period; the terminal can trigger the BSR within the uplink out-of-synchronization period based on the second indication information; the terminal can defer triggering the BSR within the uplink out-of-synchronization period based on the third indication information; or the terminal may not trigger the BSR within the uplink out-of-synchronization period based on the fourth indication information.

In the data processing method according to the embodiments of this application, the terminal receives configuration information sent by the network-side device; where the configuration information is used for the terminal to manage a BSR processing behavior to be performed within the uplink out-of-synchronization period. This allows the terminal to manage, based on the configuration information, the BSR processing behavior to be performed within the uplink out-of-synchronization period. In this way, BSR processing of the terminal is standardized in a case of uplink synchronization recovery, to prevent the terminal from initiating unnecessary uplink resource application procedures after uplink synchronization recovery, thereby improving resource utilization.

FIG. 4 is a second schematic flowchart of a data processing method according to an embodiment of this application. As shown in FIG. 4, the method includes Step 401.

Step 401: A network-side device sends configuration information to a terminal.

The configuration information is used for the terminal to manage a buffer status report BSR processing behavior to be performed within an uplink out-of-synchronization period.

Specifically, when a validity timer maintained by the terminal expires, ephemeris information corresponding to the timer becomes invalid, and the terminal cannot perform any uplink transmission.

In practice, the network-side device can send configuration information to the terminal, where the configuration information is used for the terminal to manage a BSR processing behavior to be performed within an uplink out-of-synchronization period. In this way, after the terminal receives the configuration information sent by the network-side device, the terminal can manage, based on the configuration information, the BSR processing behavior to be performed within the uplink out-of-synchronization period.

Optionally, the configuration information includes any one of the following:
(1) first indication information, where the first indication information is used to indicate the terminal to cancel, within the uplink out-of-synchronization period, a triggered BSR;
(2) second indication information, where the second indication information is used to indicate the terminal to trigger a BSR within the uplink out-of-synchronization period;
(3) third indication information, where the third indication information is used to indicate the terminal to defer triggering a BSR within the uplink out-of-synchronization period; and
(4) fourth indication information, where the fourth indication information is used to indicate the terminal not to trigger a BSR within the uplink out-of-synchronization period.

In practice, after the terminal receives the configuration information sent by the network-side device, the terminal can manage, based on the configuration information, the BSR processing behavior to be performed within the uplink out-of-synchronization period. For example, the terminal can cancel, based on the first indication information, a triggered BSR within the uplink out-of-synchronization period; the terminal can trigger the BSR within the uplink out-of-synchronization period based on the second indication information; the terminal can defer triggering the BSR within the uplink out-of-synchronization period based on the third indication information; or the terminal may not trigger the BSR within the uplink out-of-synchronization period based on the fourth indication information.

In the data processing method according to the embodiments of this application, the network-side device sends configuration information to the terminal; where the configuration information is used for the terminal to manage a BSR processing behavior to be performed within an uplink out-of-synchronization period. This allows the terminal to manage, based on the configuration information, the BSR processing behavior to be performed within the uplink out-of-synchronization period. In this way, BSR processing of the terminal is standardized in a case of uplink synchronization recovery, to prevent the terminal from initiating unnecessary uplink resource application procedures after uplink synchronization recovery, thereby improving resource utilization.

The following further describes the data processing method in the embodiments of this application through specific examples.

Step 0. When a validity timer (T430) maintained by the terminal expires, the radio resource control (Radio Resource Control, RRC) of the terminal indicates an uplink out-of-synchronization to a MAC layer of the terminal, and the MAC layer of the terminal does not perform any uplink transmission.

Step 1. During the uplink out-of-synchronization period, in a case that uplink data becomes available, the terminal may perform any one of the following:
(1) canceling a triggered BSR. Specifically, during the uplink out-of-synchronization period, the terminal can cancel all BSRs triggered before the uplink out-of-synchronization, and/or cancel BSRs triggered within the uplink out-of-synchronization period.
(2) triggering a BSR in a case that a BSR triggering condition is met. Specifically, during the uplink out-of-synchronization period, when uplink data becomes available (which can be understood as when uplink data arrives), that is, when uplink data arrives or a BSR timer expires, where the BSR timer includes at least one of a BSR retransmission timer and a periodic BSR timer, a BSR is triggered. Since during the uplink out-of-synchronization period, the terminal has no uplink transmission resources or considers the uplink transmission resources as unavailable resources, the terminal triggers the BSR according to the conventional process.
(3) deferring triggering a BSR in a case that a BSR triggering condition is met. Specifically, during the uplink out-of-synchronization period, in a case that uplink data arrives or the BSR timer expires, the terminal does not trigger the BSR according to the conventional process, but defers triggering the BSR until uplink synchronization is recovered.
(4) skipping triggering a BSR. Specifically, during the uplink out-of-synchronization period, when uplink data arrives, the terminal does not trigger the BSR according to the conventional process, but skips triggering the BSR within the uplink out-of-synchronization period.

The canceling a triggered BSR may include one or more of the following:
(1) when an uplink out-of-synchronization indication is obtained, canceling, by the terminal, a BSR triggered before the uplink out-of-synchronization indication is obtained. Specifically, during the uplink out-of-synchronization period, before the uplink out-of-synchronization indication is obtained by the terminal, the terminal can trigger the BSR according to the conventional process due to the arrival of uplink data; and when the uplink out-of-synchronization indication is obtained by the terminal, the terminal can cancel, based on the uplink out-of-synchronization indication, all BSRs triggered before the uplink out-of-synchronization indication is obtained.
(2) canceling, by the terminal, a BSR triggered within the uplink out-of-synchronization period. Specifically, during the uplink out-of-synchronization period, due to arrival of uplink data, the terminal can trigger the BSR according to the conventional process, so the terminal can cancel all BSRs triggered within the uplink out-of-synchronization period. This means that during the uplink out-of-synchronization period, in a case that the BSR triggering condition is met, the terminal still performs the behavior of triggering a BSR. In addition to performing the behavior of triggering a BSR, the terminal also performs the behavior of canceling a triggered BSR, to ensure that the terminal has no pending BSRs (pending BSR) upon uplink synchronization recovery, thereby avoiding that the terminal always needs to perform a BSR MAC CE reporting procedure upon uplink synchronization recovery.
(3) canceling a scheduling request SR triggered by a BSR. Specifically, during the uplink synchronization period, the terminal can trigger a BSR, and the BSR can trigger an SR, so the terminal can cancel the SR triggered by the BSR. This means that during the uplink out-of-synchronization period, in a case that the BSR triggering condition is met, the terminal still performs the behavior of triggering a BSR. Since the terminal cannot perform any transmission during the uplink out-of-synchronization period, the terminal can consider that there are no available transmission resources (such as PUSCH), and therefore the terminal can trigger the SR based on the mechanism of the related art. In this case, in addition to performing the behavior of triggering a BSR, the terminal also performs the behavior of canceling a triggered SR. This avoids that the terminal has no pending SRs (pending SR) upon uplink synchronization recovery, further avoiding that the terminal always needs to perform the SR procedure upon uplink synchronization recovery.
(4) canceling a random access procedure initiated by an SR. Specifically, during the uplink synchronization period, the terminal can trigger a BSR, the BSR can trigger an SR, and the SR can initiate a random access procedure RACH, so the terminal can cancel all random access procedures initiated by the SR within the uplink out-of-synchronization period. During the uplink out-of-synchronization period, in a case that the BSR triggering condition is met, the terminal still performs the behavior of triggering a BSR. Since the terminal cannot perform any transmission during the uplink out-of-synchronization period, the terminal can consider that there are no available transmission resources (such as PUSCH), and therefore the terminal can trigger the SR based on the mechanism of the related art. Since the terminal cannot perform any transmission during the uplink out-of- synchronization period, the terminal can consider that there are no available SR transmission resources (such as PUCCH), and therefore the terminal can initiate the RACH procedure based on the mechanism of the related art. In this case, in addition to performing the behavior of initiating a RACH procedure, the terminal also performs the behavior of stopping an initiated RACH. This avoids that the terminal has no initiated RACH procedures upon uplink synchronization recovery, further avoiding that the terminal always needs to perform the RACH procedure upon uplink synchronization recovery.
(5) in a case that uplink synchronization recovers, if an amount of data to be transmitted by the terminal is not zero, triggering, by the terminal, a BSR. Specifically, in a case that uplink synchronization recovers, if the terminal has data to be transmitted or the amount of the (latest) data to be transmitted is not zero, the terminal can trigger the BSR. For example, when uplink synchronization recovers, the terminal needs to first determine whether the amount of data to be transmitted is zero. If the amount of data to be transmitted is not zero, the terminal can trigger the BSR.
(6) in a case that uplink synchronization recovers, if a BSR timer of the terminal expires or has already expired, triggering, by the terminal, a BSR. Specifically, in a case that uplink synchronization recovers, if the BSR timer of the terminal expires or has already expired, where the BSR timer includes at least one of a BSR retransmission timer and a periodic BSR timer, the terminal can trigger the BSR. A specific application scenario may be: during the uplink out-of-synchronization period, in a case that the BSR triggering condition is met (for example, the BSR retransmission timer and/or the periodic BSR timer expires), the terminal performs the behavior of triggering a BSR and the behavior of canceling a triggered BSR, so that there are no pending BSRs (pending BSR) upon uplink synchronization recovery. When uplink synchronization recovers, the terminal can trigger the BSR.

In a case that the terminal triggers the BSR when the BSR triggering condition is met, the method may include one or more of the following:
(1) during the uplink out-of-synchronization period, skipping triggering an SR based on the BSR. Specifically, during the uplink out-of-synchronization period, in a case that the BSR triggering condition is met, when uplink data arrives, the terminal has no uplink transmission resources or considers the uplink transmission resources as unavailable resources within this period, so the terminal can trigger the BSR according to the conventional process, but the BSR may not trigger the SR.
(2) during the uplink out-of-synchronization period, skipping initiating a random access procedure based on an SR triggered by the BSR. Specifically, during the uplink out-of-synchronization period, in a case that the BSR triggering condition is met, the terminal triggers a BSR, the BSR triggers an SR, but the SR triggered by the BSR may not initiate a random access procedure.
(3) in a case that uplink synchronization recovers, if the terminal has no data to be transmitted or an amount of the (latest) data to be transmitted is zero, canceling, by the terminal, a BSR triggered before uplink synchronization recovery. It should be noted that the canceling, by the terminal, a BSR triggered before uplink synchronization recovery includes canceling a BSR triggered before the uplink out-of-synchronization and a BSR triggered within the uplink out-of-synchronization period.
   Specifically, during a waiting period for uplink synchronization recovery, the uplink data is discarded due to the excessively long waiting time (for example, a data packet is discarded due to expiry of a PDCP discard timer corresponding to the data packet). Then, in a case that uplink synchronization recovers, if the amount of the (latest) data to be transmitted by the terminal is zero, that is, the terminal has no data to be transmitted or the amount of the (latest) data to be transmitted is zero, the terminal can cancel all BSRs triggered according to the conventional process before uplink synchronization recovery.
(4) in a case that uplink synchronization recovers, if the terminal has no data to be transmitted, canceling, by the terminal, a BSR triggered within an uplink synchronization period. Specifically, in a case that uplink synchronization recovers, if the terminal has no data to be transmitted or the amount of the (latest) data to be transmitted is zero, the terminal can cancel all BSRs triggered within the uplink synchronization period. During a waiting period for uplink synchronization recovery, uplink data arrives, and the terminal triggers a BSR. However, the uplink data is discarded due to the excessively long waiting time (for example, a corresponding data packet is discarded due to expiry of a packet data convergence protocol (Packet Data Convergence Protocol, PDCP) discard (discard) timer (timer) corresponding to the data packet). Then, in a case that uplink synchronization recovers, if the amount of the (latest) data to be transmitted by the terminal is zero, that is, the terminal has no data to be transmitted or the amount of the (latest) data to be transmitted is zero, the terminal can cancel all BSRs triggered according to the conventional process within the uplink out-of-synchronization period.
(5) in a case that uplink synchronization recovers, if the terminal has no data to be transmitted, canceling, by the terminal, an SR triggered by the BSR before uplink synchronization recovery. It should be noted that the canceling, by the terminal, an SR triggered before uplink synchronization recovery includes canceling all SRs triggered before the uplink out-of-synchronization and SRs triggered within the uplink out-of-synchronization period, where the SRs may be SRs triggered by the BSR.
   Specifically, in a case that uplink synchronization recovers, if the terminal has no data to be transmitted or the amount of the (latest) data to be transmitted is zero, but the terminal has triggered a BSR and the BSR has triggered an SR before the uplink synchronization recovery, the terminal can cancel the SR triggered by the BSR before the uplink synchronization recovery.
(6) in a case that uplink synchronization recovers, if the terminal has no data to be transmitted, canceling, by the terminal, an SR triggered by a BSR within an uplink synchronization period. Specifically, during a waiting period for uplink synchronization recovery, uplink data arrives, then the terminal triggers a BSR, and the BSR triggers an SR. Then, in a case that uplink synchronization recovers, if the terminal has no data to be transmitted or the amount of the (latest) data to be transmitted is zero, the terminal can cancel the SR triggered by the BSR within the uplink synchronization period.
(7) in a case that uplink synchronization recovers, if the terminal has no data to be transmitted, stopping, by the terminal, a random access procedure initiated by an SR before uplink synchronization recovery. It should be noted that the stopping, by the terminal, a RACH triggered before uplink synchronization recovery includes stopping a RACH initiated before the uplink out-of-synchronization and a RACH initiated within the uplink out-of-synchronization period. The RACH may be initiated by an SR, and the SR is triggered by the BSR.
   Specifically, before uplink synchronization recovery, the terminal triggers the BSR, the BSR triggers the SR, and the SR initiates the random access procedure. Then, in a case that uplink synchronization recovers, if the terminal has no data to be transmitted or the amount of the (latest) data to be transmitted is zero, the terminal can stop the random access procedure initiated by the SR before uplink synchronization recovery.
(8) in a case that uplink synchronization recovers, if the terminal has no data to be transmitted, stopping, by the terminal, a random access procedure initiated by an SR within the uplink out-of-synchronization period.
   Specifically, during the uplink out-of-synchronization period, uplink data arrives, then the terminal triggers a BSR, the BSR triggers an SR, and the SR initiates a random access procedure. Then, in a case that uplink synchronization recovers, if the terminal has no data to be transmitted or the amount of the (latest) data to be transmitted is zero, the terminal stops the random access procedure initiated by the SR within the uplink out-of-synchronization period.
(9) in a case that uplink synchronization recovers, if the terminal has a valid SR transmission resource, canceling, by the terminal, a random access procedure initiated by an SR within an uplink synchronization period. For example, during the uplink out-of-synchronization period, in a case that the BSR triggering condition is met (for example, when uplink data arrives), since there are no available uplink transmission resources (that is, PUSCH resources), the terminal triggers a BSR, and the BSR triggers an SR. Since during the uplink out-of-synchronization period, SR transmission resources (that is, PUCCH resources) are also considered as unavailable resources, the terminal can initiate a random access procedure. After uplink synchronization recovery, if the terminal has no uplink resources or the uplink resources are insufficient to transmit all the data to be transmitted (which can be understood as that the amount of data to be transmitted is not zero) or BSR MAC CEs, but the terminal has an available valid SR transmission resource, the terminal can cancel the random access procedure initiated by the SR within the uplink synchronization period. Additionally, in this case, the terminal can trigger an SR.
(10) in a case that uplink synchronization recovers, if the terminal has a valid SR transmission resource, triggering, by the terminal, an SR. Specifically, in a case that uplink synchronization recovers, if the terminal has no uplink resources or the uplink resources are insufficient to transmit all data to be transmitted or BSR MAC CEs, but the terminal has an available valid SR transmission resource, the terminal can trigger the SR. For example, during the uplink out-of-synchronization period, in a case that the BSR triggering condition is met (for example, when uplink data arrives), since there are no available uplink transmission resources (that is, PUSCH resources), the terminal triggers a BSR, but the BSR does not trigger an SR. In a case that uplink synchronization recovers, if the terminal has no uplink resources or the uplink resources are insufficient to transmit all the data to be transmitted (which can be understood as that the amount of data to be transmitted is not zero) or BSR MAC CEs, but the terminal has an available valid SR transmission resource, the terminal can trigger the SR.

In a case that the terminal defers triggering the BSR when the BSR triggering condition is met, the method may include one or more of the following:
(a) in a case that uplink synchronization recovers, triggering, by the terminal, the BSR. For example, when uplink synchronization recovers, the terminal triggers the BSR. That is, during the uplink out-of-synchronization period, when uplink data arrives, the terminal does not trigger the BSR, but triggers the BSR upon uplink synchronization recovery. An example application scenario is: during the uplink out-of-synchronization period, in a case that the BSR triggering condition is met, the terminal defers triggering a BSR. In a case that uplink synchronization recovers, the terminal triggers the BSR. This means that in a case that uplink synchronization recovers, regardless of whether there is data to be transmitted, the terminal triggers the BSR. Additionally, it should be noted that in such case, if a conventional BSR is triggered, the terminal can perform an uplink skipping (UL skipping) procedure in a case that there is no data to be transmitted. That is, when the terminal performs a MAC multiplexing procedure, if the amount of data to be transmitted indicated by the conventional BSR is zero, the terminal can skip transmitting a BSR MAC CE on an uplink grant resource.
(b) in a case that uplink synchronization recovers, if the terminal has data to be transmitted or an amount of data to be transmitted is not zero, triggering, by the terminal, the BSR. For example, when uplink synchronization recovers, the terminal needs to first determine whether the amount of data to be transmitted is zero. If the amount of data to be transmitted is not zero, the terminal triggers the BSR. Additionally, it should be noted that when uplink synchronization recovers, if the uplink resource of the terminal is sufficient to transmit the amount of the (latest) data to be transmitted, the terminal does not need to trigger the BSR. However, when uplink synchronization recovers, if the amount of data to be transmitted by the terminal is not zero and the uplink resource of the terminal is insufficient to transmit the amount of the (latest) data to be transmitted, the terminal triggers the BSR.
(c) in a case that uplink synchronization recovers, if a BSR timer of the terminal expires or has already expired, triggering, by the terminal, the BSR. Specifically, in a case that uplink synchronization recovers, if the BSR timer of the terminal expires or has already expired, the terminal can trigger the BSR. A specific application scenario may be: during the uplink out-of-synchronization period, in a case that the BSR triggering condition is met (for example, the BSR retransmission timer and/or the periodic BSR timer expires), the terminal performs the behavior of triggering a BSR and the behavior of canceling a triggered BSR, so that there are no pending BSRs (pending BSR) upon uplink synchronization recovery. When uplink synchronization recovers, the terminal can trigger the BSR.
(d) in a case that uplink synchronization recovers, if the terminal has no data to be transmitted or an amount of data to be transmitted is zero, skipping triggering, by the terminal, the BSR. Specifically, in a case that uplink synchronization recovers, if the terminal has no data to be transmitted or the amount of the (latest) data to be transmitted is zero, the terminal may not trigger the BSR. For example, when uplink synchronization recovers, the terminal needs to first determine whether the amount of data to be transmitted is zero. If the amount of data to be transmitted is zero, the terminal does not trigger the BSR.
(e) in a case that uplink synchronization recovers, if an uplink resource is insufficient to transmit all data to be transmitted, triggering, by the terminal, the BSR. For example, during the uplink out-of-synchronization period, the CG resources of the terminal are considered as unavailable resources. After uplink synchronization recovery, the CG resources of the terminal are considered as available resources. Therefore, if the CG resources of the terminal are insufficient to transmit all the (latest) data to be transmitted, the terminal triggers the BSR.
(f) in a case that uplink synchronization recovers, if an uplink resource is sufficient to transmit all data to be transmitted, skipping triggering, by the terminal, the BSR. For example, during the uplink out-of-synchronization period, the CG resources of the terminal are considered as unavailable resources. After uplink synchronization recovery, the CG resources of the terminal are considered as available resources. Therefore, if the CG resources of the terminal are sufficient to transmit all the (latest) data to be transmitted, the terminal does not trigger the BSR.

In a case that the terminal does not trigger the BSR, the method may further include one or more of the following:
(1) in a case that uplink synchronization recovers, if the terminal has data to be transmitted or an amount of data to be transmitted is not zero, triggering, by the terminal, a BSR. For example, when uplink synchronization recovers, the terminal needs to first determine whether the amount of data to be transmitted is zero. If the amount of data to be transmitted is not zero, the terminal triggers the BSR.
(2) in a case that uplink synchronization recovers, if the terminal has data to be transmitted or an amount of data to be transmitted is zero, skipping triggering, by the terminal, a BSR. For example, when uplink synchronization recovers, the terminal needs to first determine whether the amount of data to be transmitted is zero. If the amount of data to be transmitted is zero, the terminal does not trigger the BSR.

Step 2. The terminal receives configuration information from a network side, where the configuration information is used to manage a BSR processing behavior to be performed by the terminal within the uplink out-of-synchronization period.

The configuration information includes one or more of the following:
(1) first indication information, where the first indication information is used to indicate the terminal to trigger a BSR according to a conventional process within the uplink out-of-synchronization period;
(2) second indication information, where the second indication information is used to indicate the terminal to defer triggering a BSR within the uplink out-of-synchronization period; and
(3) third indication information, where the third indication information is used to indicate the terminal not to trigger a BSR within the uplink out-of-synchronization period;

The data processing method provided in the embodiments of this application may be executed by a data processing apparatus. In the embodiments of this application, the data processing apparatus performing the data processing method is used as an example to describe a data processing apparatus according to an embodiment of this application.

FIG. 5 is a first schematic structural diagram of a data processing apparatus according to an embodiment of this application. As shown in FIG. 5, the data processing apparatus 500 is applied to a terminal (for example, the data processing apparatus 500 may include at least some modules or functions of the terminal, or the terminal includes the data processing apparatus 500), and includes:
an execution module 501, configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

During the uplink out-of-synchronization period, the data processing apparatus according to the embodiment of this application performs any one of the following: canceling a triggered buffer status report BSR; triggering a BSR in a case that a BSR triggering condition is met; deferring triggering a BSR in a case that a BSR triggering condition is met; and skipping triggering a BSR. This standardizes BSR processing during the uplink out-of-synchronization period, to prevent the terminal from initiating unnecessary uplink resource application procedures after uplink synchronization recovery, thereby improving resource utilization.

Optionally, the canceling a triggered BSR includes one or more of the following:
when an uplink out-of-synchronization indication is obtained, canceling, by the terminal, a BSR triggered before the uplink out-of-synchronization indication is obtained; and
canceling, by the terminal, a BSR triggered within the uplink out-of-synchronization period.

Optionally, the canceling, by the terminal, a BSR triggered within the uplink out-of-synchronization period may be: during the uplink out-of-synchronization period, in a case that the terminal has no data to be transmitted (for example, an amount of data to be transmitted is 0), canceling, by the terminal, the BSR triggered within the uplink out-of-synchronization period.

In another optional embodiment, during the uplink out-of-synchronization period, in a case that the terminal has no data to be transmitted (for example, an amount of data to be transmitted is 0), the terminal cancels the triggered BSR. It should be noted that the triggered BSR may be triggered within the uplink out-of-synchronization period, or may be triggered at other times (for example, may be triggered at any time before the uplink out-of-synchronization period).

Optionally, the canceling a triggered BSR further includes one or more of the following:
canceling a scheduling request SR triggered by the BSR; and
canceling a random access procedure initiated by an SR.

Optionally, in a case that the execution module 501 performs the canceling a triggered BSR, the data processing apparatus 500 is further configured for one or more of the following:
in a case that uplink synchronization recovers, if an amount of data to be transmitted by the terminal is not zero, triggering a BSR; and
in a case that uplink synchronization recovers, if a BSR timer of the terminal expires or has already expired, triggering a BSR.

Optionally, in a case that the terminal triggers the BSR when the BSR triggering condition is met, the data processing apparatus 500 is configured for one or more of the following:
during the uplink out-of-synchronization period, skipping triggering an SR based on the BSR; and
during the uplink out-of-synchronization period, skipping initiating a random access procedure based on an SR triggered by the BSR.

Optionally, the data processing apparatus 500 performs one or more of the following:
in a case that uplink synchronization recovers, if the terminal has no data to be transmitted, canceling a BSR triggered before uplink synchronization recovery;
in a case that uplink synchronization recovers, if the terminal has no data to be transmitted, canceling a BSR triggered within an uplink synchronization period;
in a case that uplink synchronization recovers, if the terminal has no data to be transmitted, canceling an SR triggered by a BSR before uplink synchronization recovery;
in a case that uplink synchronization recovers, if the terminal has no data to be transmitted, canceling an SR triggered by a BSR within an uplink synchronization period;
in a case that uplink synchronization recovers, if the terminal has no data to be transmitted, stopping a random access procedure initiated by an SR before uplink synchronization recovery;
in a case that uplink synchronization recovers, if the terminal has no data to be transmitted, stopping a random access procedure initiated by an SR within the uplink out-of-synchronization period;
in a case that uplink synchronization recovers, if the terminal has a valid SR transmission resource, canceling a random access procedure initiated by an SR within an uplink synchronization period; and
in a case that uplink synchronization recovers, if the terminal has a valid SR transmission resource, triggering an SR.

Optionally, in a case that the terminal defers triggering the BSR when the BSR triggering condition is met, the data processing apparatus 500 is configured for one or more of the following:
in a case that uplink synchronization recovers, triggering the BSR;
in a case that uplink synchronization recovers, if an amount of data to be transmitted by the terminal is not zero, triggering the BSR;
in a case that uplink synchronization recovers, if a BSR timer of the terminal expires or has already expired, triggering the BSR;
in a case that uplink synchronization recovers, if an amount of data to be transmitted by the terminal is zero, skipping triggering the BSR;
in a case that uplink synchronization recovers, if an uplink resource is insufficient to transmit all data to be transmitted, triggering the BSR; and
in a case that uplink synchronization recovers, if an uplink resource is sufficient to transmit all data to be transmitted, skipping triggering the BSR.

Optionally, in a case that the terminal does not trigger the BSR, the data processing apparatus 500 is configured for one or more of the following:
in a case that uplink synchronization recovers, if an amount of data to be transmitted by the terminal is not zero, triggering the BSR;
in a case that uplink synchronization recovers, if a BSR timer of the terminal expires or has already expired, triggering the BSR; and
in a case that uplink synchronization recovers, if an uplink resource is insufficient to transmit all data to be transmitted, triggering the BSR.

Optionally, the BSR triggering condition includes one or more of the following:
uplink data has arrived; and
a BSR timer has expired; where the BSR timer includes at least one of a BSR retransmission timer and a periodic BSR timer.

Optionally, the data processing apparatus 500 further includes:
a receiving module, configured to receive configuration information sent by a network-side device; where the configuration information is used for the terminal to manage a BSR processing behavior to be performed within the uplink out-of-synchronization period.

Optionally, the configuration information includes any one of the following:
first indication information, where the first indication information is used to indicate the terminal to cancel, within the uplink out-of-synchronization period, a triggered BSR;
second indication information, where the second indication information is used to indicate the terminal to trigger a BSR within the uplink out-of-synchronization period;
third indication information, where the third indication information is used to indicate the terminal to defer triggering a BSR within the uplink out-of-synchronization period; and
fourth indication information, where the fourth indication information is used to indicate the terminal not to trigger a BSR within the uplink out-of-synchronization period.

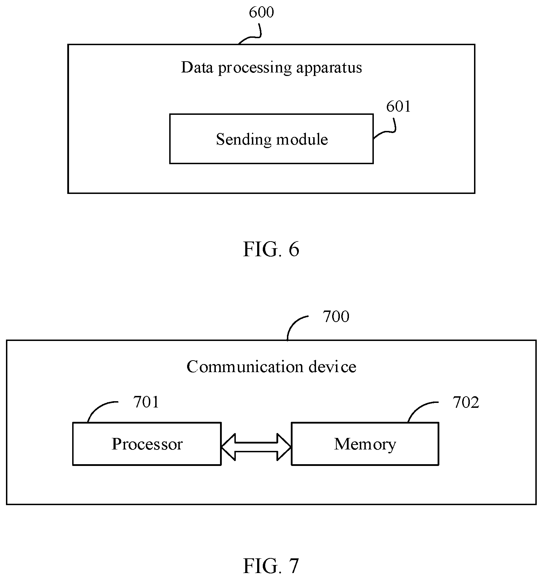

FIG. 6 is a second schematic structural diagram of a data processing apparatus according to an embodiment of this application. As shown in FIG. 6, the data processing apparatus 600 is applied to a network-side device and includes:
a sending module 601, configured to send configuration information to a terminal; where
the configuration information is used for the terminal to manage a buffer status report BSR processing behavior to be performed within an uplink out-of-synchronization period.

The data processing apparatus according to the embodiment of this application sends configuration information to the terminal; where the configuration information is used for the terminal to manage a BSR processing behavior to be performed within an uplink out-of-synchronization period. This allows the terminal to manage, based on the configuration information, the BSR processing behavior to be performed within the uplink out-of-synchronization period. In this way, BSR processing of the terminal is standardized in a case of uplink synchronization recovery, to prevent the terminal from initiating unnecessary uplink resource application procedures after uplink synchronization recovery, thereby improving resource utilization.

Optionally, the configuration information includes at least one of the following:
first indication information, where the first indication information is used to indicate the terminal to cancel, within the uplink out-of-synchronization period, a triggered BSR;
second indication information, where the second indication information is used to indicate the terminal to trigger a BSR within the uplink out-of-synchronization period;
third indication information, where the third indication information is used to indicate the terminal to defer triggering a BSR within the uplink out-of-synchronization period; and
fourth indication information, where the fourth indication information is used to indicate the terminal not to trigger a BSR within the uplink out-of-synchronization period.

The data processing apparatus in the embodiment of this application may be an electronic device, such as an electronic device having an operating system, or may be a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The data processing apparatus provided in the embodiments of this application can implement the processes of the method embodiments shown in FIG. 3 or FIG. 4, with the same technical effects achieved. To avoid repetition, details are not described herein again.

FIG. 7 is a schematic structural diagram of a communication device according to an embodiment of this application. As shown in FIG. 7, the communication device 700 includes a processor 701 and a memory 702. The memory 702 stores a program or instructions capable of running on the processor 701. For example, when the communication device 700 is a terminal, the program or instructions are executed by the processor 701 to implement the steps of the data processing method embodiment described above, with the same technical effects achieved. When the communication device 700 is a network-side device, the program or instructions are executed by the processor 701 to implement the steps of the data processing method embodiment described above, with the same technical effects achieved. To avoid repetition, details are not described herein again.

An embodiment of this application further provides a terminal including a processor and a communication interface. The processor is configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

This terminal embodiment corresponds to the above method embodiments at the terminal side. The implementation processes and methods of the above method embodiments can be applied to this terminal embodiment, the same technical effects achieved.

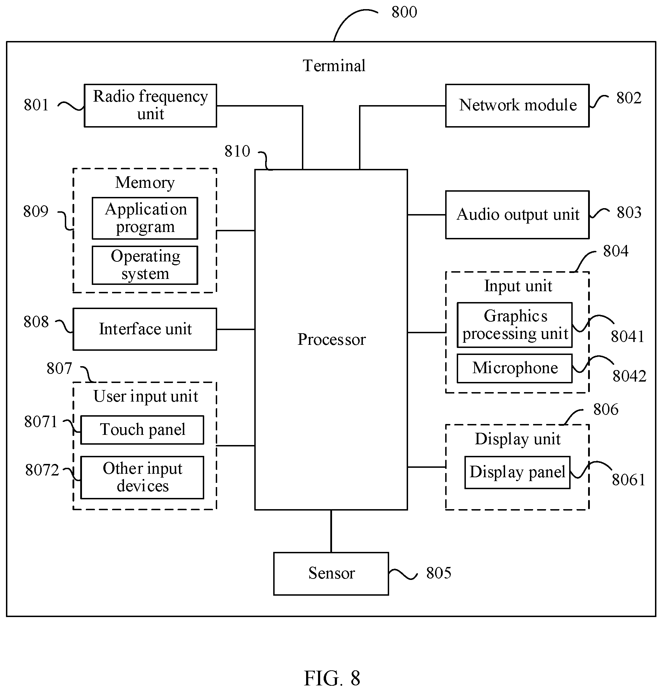

FIG. 8 is a schematic structural diagram of a terminal according to an embodiment of this application. As shown in FIG. 8, the terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) supplying power to the components, and the power supply may be logically connected to the processor 810 through a power management system, so as to implement functions such as charging management, discharging management, and power consumption management through the power management system. The structure of the terminal shown in FIG. 8 does not constitute any limitation on the terminal. The terminal may include more or fewer components than shown in the figure, or a combination of some components, or the components disposed differently. Details are not described herein.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but is not limited to a physical keyboard, a function key (such as a volume control key or an on/off key), a trackball, a mouse, and a joystick. Details are not described herein.

In the embodiment of this application, after receiving downlink data from a network-side device, the radio frequency unit 801 can transmit the downlink data to the processor 810 for processing. In addition, the radio frequency unit 801 can send uplink data to the network-side device. Typically, the radio frequency unit 801 includes but is not limited to an antenna, an amplifier, a transceiver, a coupler, a low noise amplifier, and a duplexer.

The memory 809 may be configured to store software programs or instructions and various data. The memory 809 may mainly include a first storage area for storing programs or instructions and a second storage area for storing data. The first storage area may store an operating system, an application program or instructions required by at least one function (for example, a sound play function or an image play function), and the like. Additionally, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 809 in the embodiment of this application includes but is not limited to these and any other suitable types of memory.

The processor 810 may include one or more processing units. Optionally, an application processor and a modem processor are integrated in the processor 810, where the application processor mainly processes operations related to an operating system, a user interface, an application program, and the like, and the modem processor, such as a baseband processor, mainly processes wireless communication signals. It can be understood that the modem processor may alternatively be not integrated in the processor 810.

The processor 810 is configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

When an uplink out-of-synchronization indication is obtained, the terminal provided in the embodiment of this application may cancel a BSR triggered before the uplink out-of-synchronization indication is obtained; the terminal may cancel a BSR triggered within the uplink out-of-synchronization period; the terminal may cancel a scheduling request SR triggered by a BSR; the terminal may cancel a random access procedure initiated by an SR; in a case that uplink synchronization recovers, if an amount of data to be transmitted by the terminal is not zero, the terminal triggers the BSR; and in a case that uplink synchronization recovers, if a BSR timer of the terminal expires or has already expired, the terminal triggers the BSR. This standardizes BSR processing of the terminal during the uplink out-of-synchronization period and after uplink synchronization recovery, to prevent the terminal from initiating unnecessary uplink resource application procedures after uplink synchronization recovery, thereby improving resource utilization.

An embodiment of this application further provides a network-side device including a processor and a communication interface. The communication interface is configured to send configuration information to a terminal; where the configuration information is used for the terminal to manage a buffer status report BSR processing behavior to be performed within an uplink out-of-synchronization period. This network-side device embodiment corresponds to the above method embodiment on the network-side device. The implementation processes and methods of the above method embodiment can be applied to this network-side device embodiment, with the same technical effects achieved.

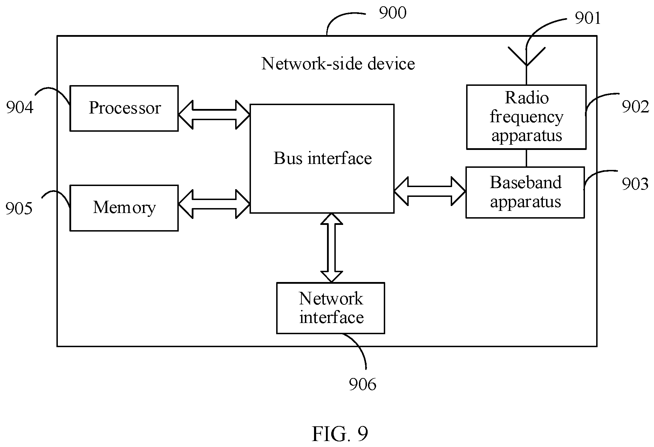

FIG. 9 is a schematic structural diagram of a network-side device according to an embodiment of this application. As shown in FIG. 9, the network-side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information via the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out via the antenna 901.

The method performed by the network-side device in the above embodiments may be implemented in the baseband apparatus 903, and the baseband apparatus 903 includes a baseband processor.

The baseband apparatus 903 may include, for example, at least one baseband processing unit, where a plurality of chips are disposed on the baseband processing unit. As shown in FIG. 9, one of the chips is, for example, the baseband processor, and connected to the memory 905 via a bus interface, to invoke the program in the memory 905 to perform the operations of the network device shown in the foregoing method embodiments.

The network-side device may further include a network interface 906. The interface is, for example, a common public radio interface (common public radio interface, CPRI).

Specifically, the network-side device 900 in the embodiment of this application further includes: instructions or programs stored in the memory 905 and capable of running on the processor 904. The processor 904 calls the instructions or programs in the memory 905 to perform the method shown in FIG. 4, with the same technical effects achieved. To avoid repetition, details are not described herein again.

An embodiment of this application further provides a data processing system including: a terminal and a network-side device. The terminal may be configured to perform the steps of the above data processing method on the terminal side, and the network-side device may be configured to perform the steps of the above data processing method on the network-side device side.

An embodiment of this application further provides a readable storage medium. The readable storage medium may be volatile or non-volatile, and the readable storage medium stores a program or instructions. When the program or instructions are executed by a processor, the processes of the above embodiments of the data processing method are implemented, with the same technical effects achieved. To avoid repetition, details are not described herein again.

The processor is a processor in the terminal described in the foregoing embodiments. The readable storage medium may be non-volatile or non-transient. The readable storage medium may include a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the foregoing data processing method embodiments, with the same technical effects achieved. To avoid repetition, details are not described herein again.

It should be understood that the chip in the embodiment of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing data processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data processing method, comprising:
during an uplink out-of-synchronization period, performing, by a terminal, any one of the following:
canceling a triggered buffer status report BSR;
triggering a BSR in a case that a BSR triggering condition is met;
deferring triggering a BSR in a case that a BSR triggering condition is met; and
skipping triggering a BSR.

2. The data processing method according to claim 1, wherein the canceling a triggered BSR comprises one or more of the following:
when an uplink out-of-synchronization indication is obtained, canceling, by the terminal, a BSR triggered before the uplink out-of-synchronization indication is obtained; and
canceling, by the terminal, a BSR triggered within the uplink out-of-synchronization period.

3. The data processing method according to claim 1 or 2, wherein the canceling a triggered BSR further comprises one or more of the following:
canceling a scheduling request SR triggered by the BSR; and
canceling a random access procedure initiated by an SR.

4. The data processing method according to claim 2, wherein in a case that the terminal cancels the triggered BSR, the method comprises one or more of the following:
in a case that uplink synchronization recovers, if an amount of data to be transmitted by the terminal is not zero, triggering, by the terminal, a BSR; and
in a case that uplink synchronization recovers, if a BSR timer of the terminal expires or has already expired, triggering, by the terminal, a BSR.

5. The data processing method according to claim 1, wherein in a case that the terminal triggers the BSR when the BSR triggering condition is met, the method comprises one or more of the following:
during the uplink out-of-synchronization period, skipping triggering an SR based on the BSR; and
during the uplink out-of-synchronization period, skipping initiating a random access procedure based on an SR triggered by the BSR.

6. The data processing method according to claim 1 or 5, wherein the method comprises one or more of the following:
in a case that uplink synchronization recovers, if the terminal has no data to be transmitted, canceling, by the terminal, a BSR triggered before uplink synchronization recovery;
in a case that uplink synchronization recovers, if the terminal has no data to be transmitted, canceling, by the terminal, a BSR triggered within an uplink synchronization period;
in a case that uplink synchronization recovers, if the terminal has no data to be transmitted, canceling, by the terminal, an SR triggered by a BSR before uplink synchronization recovery;
in a case that uplink synchronization recovers, if the terminal has no data to be transmitted, canceling, by the terminal, an SR triggered by a BSR within an uplink synchronization period;
in a case that uplink synchronization recovers, if the terminal has no data to be transmitted, stopping, by the terminal, a random access procedure initiated by an SR before uplink synchronization recovery;
in a case that uplink synchronization recovers, if the terminal has no data to be transmitted, stopping, by the terminal, a random access procedure initiated by an SR within the uplink out-of-synchronization period;
in a case that uplink synchronization recovers, if the terminal has a valid SR transmission resource, canceling, by the terminal, a random access procedure initiated by an SR within an uplink synchronization period; and
in a case that uplink synchronization recovers, if the terminal has a valid SR transmission resource, triggering, by the terminal, an SR.

7. The data processing method according to claim 1, wherein in a case that the terminal defers triggering the BSR when the BSR triggering condition is met, the method comprises one or more of the following:
in a case that uplink synchronization recovers, triggering, by the terminal, the BSR;
in a case that uplink synchronization recovers, if an amount of data to be transmitted by the terminal is not zero, triggering, by the terminal, the BSR; and
in a case that uplink synchronization recovers, if a BSR timer of the terminal expires or has already expired, triggering, by the terminal, the BSR;
in a case that uplink synchronization recovers, if an amount of data to be transmitted by the terminal is zero, skipping triggering, by the terminal, the BSR;
in a case that uplink synchronization recovers, if an uplink resource is insufficient to transmit all data to be transmitted, triggering, by the terminal, the BSR; and
in a case that uplink synchronization recovers, if an uplink resource is sufficient to transmit all data to be transmitted, skipping triggering, by the terminal, the BSR.

8. The data processing method according to claim 1, wherein in a case that the terminal does not trigger the BSR, the method comprises one or more of the following:
in a case that uplink synchronization recovers, if an amount of data to be transmitted by the terminal is not zero, triggering, by the terminal, the BSR;
in a case that uplink synchronization recovers, if a BSR timer of the terminal expires or has already expired, triggering, by the terminal, the BSR; and
in a case that uplink synchronization recovers, if an uplink resource is insufficient to transmit all data to be transmitted, triggering, by the terminal, the BSR.

9. The data processing method according to claim 1, wherein the BSR triggering condition comprises one or more of the following:
uplink data has arrived; and
a BSR timer has expired; wherein the BSR timer comprises at least one of a BSR retransmission timer and a periodic BSR timer.

10. The data processing method according to any one of claims 1 to 9, wherein the method further comprises:
receiving, by the terminal, configuration information sent by a network-side device; wherein the configuration information is used for the terminal to manage a BSR processing behavior to be performed within the uplink out-of-synchronization period.

11. The data processing method according to claim 10, wherein the configuration information comprises any one of the following:
first indication information, wherein the first indication information is used to indicate the terminal to cancel, within the uplink out-of-synchronization period, a triggered BSR;
second indication information, wherein the second indication information is used to indicate the terminal to trigger the BSR within the uplink out-of-synchronization period;
third indication information, wherein the third indication information is used to indicate the terminal to defer triggering the BSR within the uplink out-of-synchronization period; and
fourth indication information, wherein the fourth indication information is used to indicate the terminal not to trigger the BSR within the uplink out-of-synchronization period.

12. The data processing method according to claim 2, wherein the canceling, by the terminal, a BSR triggered within the uplink out-of-synchronization period comprises:
during the uplink out-of-synchronization period, in a case that the terminal has no data to be transmitted, canceling, by the terminal, the BSR triggered within the uplink out-of-synchronization period.

13. A data processing method, comprising:
sending, by a network-side device, configuration information to a terminal, wherein
the configuration information is used for the terminal to manage a buffer status report BSR processing behavior to be performed within an uplink out-of-synchronization period.

14. The data processing method according to claim 13, wherein the configuration information comprises at least one of the following:
first indication information, wherein the first indication information is used to indicate the terminal to cancel, within the uplink out-of-synchronization period, a triggered BSR;
second indication information, wherein the second indication information is used to indicate the terminal to trigger a BSR within the uplink out-of-synchronization period;
third indication information, wherein the third indication information is used to indicate the terminal to defer triggering a BSR within the uplink out-of-synchronization period; and
fourth indication information, wherein the fourth indication information is used to indicate the terminal not to trigger a BSR within the uplink out-of-synchronization period.

15. A data processing apparatus, comprising:
an execution module configured to perform any one of the following during an uplink out-of-synchronization period:
canceling a triggered buffer status report BSR;
triggering a BSR in a case that a BSR triggering condition is met;
deferring triggering a BSR in a case that a BSR triggering condition is met; and
skipping triggering a BSR.

16. A data processing apparatus, comprising:
a sending module configured to send configuration information to a terminal, wherein
the configuration information is used for the terminal to manage a buffer status report BSR processing behavior to be performed within an uplink out-of-synchronization period.

17. A terminal, comprising a processor and a memory, wherein the memory stores a program or instructions capable of running on the processor, and when the program or instructions are executed by the processor, the steps of the data processing method according to any one of claims 1 to 12 are implemented.

18. A network-side device, comprising a processor and a memory, wherein the memory stores a program or instructions capable of running on the processor, and when the program or instructions are executed by the processor, the steps of the data processing method according to claim 13 or 14 are implemented.

19. A readable storage medium, wherein the readable storage medium stores a program or instructions, and when the program or instructions are executed by a processor, the steps of the data processing method according to any one of claims 1 to 12 are implemented, or the steps of the data processing method according to claim 13 or 14 are implemented.

20. A chip, wherein the chip comprises a processor and a communication interface, the communication interface is coupled to the processor, and the processor is configured to run a program or instructions to implement the steps of the data processing method according to any one of claims 1 to 12, or implement the steps of the data processing method according to claim 13 or 14.

21. A computer program product, wherein the program product is stored in a nonvolatile storage medium, and the program product is executed by at least one processor to implement the steps of the data processing method according to any one of claims 1 to 12, or implement the steps of the data processing method according to claim 13 or 14.

22. An electronic device, wherein the electronic device is configured to perform the steps of the data processing method according to any one of claims 1 to 12, or the steps of the data processing method according to claim 13 or 14.
